(19) Europäisches Patentamt
European Patent Office
Office européen des brevets

(11) EP 2 597 524 B1

(12) EUROPEAN PATENT SPECIFICATION

(45) Date of publication and mention of the grant of the patent:
**21.06.2017 Bulletin 2017/25**

(21) Application number: **11809421.8**

(22) Date of filing: **08.07.2011**

(51) Int Cl.:
***G03G 15/02*** *(2006.01)* ***F16C 13/00*** *(2006.01)*

(86) International application number:
**PCT/JP2011/003925**

(87) International publication number:
**WO 2012/011245 (26.01.2012 Gazette 2012/04)**

(54) **CHARGED MEMBER, PROCESS CARTRIDGE, AND ELECTRONIC PHOTOGRAPH DEVICE**

GELADENES ELEMENT, PROZESSKARTUSCHE UND ELEKTRONISCHE PHOTOGRAPHIEVORRICHTUNG

ÉLÉMENT CHARGÉ, CARTOUCHE DE TRAITEMENT ET DISPOSITIF PHOTOGRAPHIQUE ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.07.2010 JP 2010162828**

(43) Date of publication of application:
**29.05.2013 Bulletin 2013/22**

(73) Proprietor: **Canon Kabushiki Kaisha**
**Tokyo, 146-8501 (JP)**

(72) Inventors:
- **KURODA, Noriaki**
**Tokyo 146-8501 (JP)**
- **SUZUMURA, Noriko**
**Tokyo 146-8501 (JP)**

(74) Representative: **TBK**
**Bavariaring 4-6**
**80336 München (DE)**

(56) References cited:
**WO-A1-2011/080906**
**JP-A- 2006 088 059**
**JP-A- 2006 267 397**
**JP-A- 2006 267 397**
**JP-A- 2008 276 024**
**JP-A- 2009 132 815**
**KR-B1- 100 359 731**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 597 524 B1

Printed by Jouve, 75001 PARIS (FR)

## Description

### Technical Field

The present invention relates to a charging member, a process cartridge, and an electrophotographic apparatus.

### Background Art

A charging roller, which abuts on a drum-shaped electrophotographic photosensitive member (hereinafter, abbreviated as "photosensitive drum") and charges a surface of the photosensitive drum while being rotated according to the rotation of the photosensitive drum, is generally constructed so as to have a flexible elastic layer including rubber so that a nip width between the charging roller and the electrophotographic photosensitive member is sufficiently assured, and the charging roller can be stably rotated according to the rotation of the photosensitive drum.

However, when the charging member and the electrophotographic photosensitive member abutting on each other are kept in a steady state for a long period of time, deformation that is not easily restored (hereinafter, also referred to as "compression set") may occur in a part of the charging member abutting on the electrophotographic photosensitive member. When the electrophotographic photosensitive member is charged using the charging member partially having the compression set, charging unevenness may occur in the electrophotographic photosensitive member, and density unevenness attributed to the charging unevenness may occur in an electrophotographic image.

In order to deal with such problem, Patent Literature 1 discloses that occurrence of permanent deformation was inhibited by controlling a micro hardness or the like of a charging member.

### Citation List

### Patent Literature

PTL 1: Japanese Patent Application Laid-Open No. 2007-93937

KR100359731 (B1) discloses a coating composition comprising: (a) a polyurethane resin solution having resin solids of 5-15% by weight; (b) polyhydroxy fullerene of 0.1-5% by weight; (c) a mixed solvent of 5-30% by weight of 1-methyl-2-pyrrolidinone and propylene glycol methyl ether acetate; and (d) a hardening agent of 0.5-5% by weight and water. The polyhydroxy fullerene containing coating composition of a primary charge roller for a image reproducing device is excellent in abrasion resistance, rub resistance and conductivity.

JP2006267397 (A) describes a manufacturing method for a conductive member including a conductive support, an elastic layer and a covering layer, which are formed along the periphery of the conductive support. The manufacturing method comprises at least the step of forming the covering layer by applying a coating liquid on the peripheral face of the elastic layer, and the step of keeping the specific gravity of the coating liquid constant.

### Summary of Invention

### Technical Problem

However, when a hardness of a charging roller was increased in order to inhibit the occurrence of a compression set itself, the follow-up property of the charging roller to the rotation of a photosensitive drum was deteriorated, with the result that charging unevenness occurred in the photosensitive drum in some cases. Thus, the inventors of the present invention recognized that it is effective for charging the photosensitive drum more stably to enhance the follow-up property of the charging roller to the rotation of the photosensitive drum.

Thus, the present invention is directed to provide a charging member, which has excellent follow-up property to the rotation of a photosensitive drum and can charge an electrophotographic photosensitive member more stably.

Further, the present invention is directed to provide an electrophotographic apparatus and a process cartridge capable of forming high-quality electrophotographic images stably.

### Solution to Problem

According to one aspect of the present invention, there is provided a charging member as defined in claim 1.

Further, according to another aspect of the present invention, there is provided a process cartridge, comprising the above-mentioned charging member, and an electrophotographic photosensitive member which is brought into contact with the charging member, the members being integrally supported, in which the process cartridge is removably mounted onto a main body of an electrophotographic apparatus.

According to further aspect of the present invention, there is provided an electrophotographic apparatus, comprising the above-mentioned charging member, and an electrophotographic photosensitive member which is brought into contact with the charging member.

## Advantageous Effects of Invention

According to the present invention, it is possible to obtain the charging member, which has high follow-up property of the rotation according to the rotation of the electrophotographic photosensitive member. As a result, the charging uniformity of the electrophotographic photosensitive member is improved, and an electrophotographic image with higher quality can be formed stably.

## Brief Description of Drawings

[FIG. 1]

FIG. 1 is a cross-sectional view of a charging member according to the present invention.
[FIG. 2]FIG. 2 is an explanatory diagram of an electrophotographic apparatus according to the present invention.
[FIG. 3]FIG. 3 is an outline of an apparatus for measuring a dynamic friction coefficient of a charging member.
[FIG. 4]FIG. 4 is an outline of a chart obtained by the apparatus for measuring a dynamic friction coefficient of a charging member.
[FIG. 5]FIG. 5 is an explanatory diagram of a crosslinking reaction in a step of forming a surface layer.
[FIG. 6]FIG. 6 is a view showing results of $^{29}$Si-NMR measurement of a polymer compound according to Example 1.
[FIG. 7]FIG. 7 is a view showing results of $^{13}$C-NMR measurement of the polymer compound according to Example 1.
[FIG. 8]FIG. 8 is a view showing results of ESCA measurement of a surface layer of a charging roller according to Example 1.

## Description of Embodiments

FIG. 1 is a cross-sectional view of a charging roller 100 according to the present invention in a direction perpendicular to an axis of the charging roller 100. The charging roller 100 has a mandrel 101, a conductive elastic layer 102 formed on an outer periphery of the mandrel 101, and a surface layer 103 formed on an outer periphery of the conductive elastic layer 102.

<Mandrel>

The mandrel is not particularly limited as long as it has conductivity (conductive support), and examples thereof include a support formed of iron, copper, stainless steel, aluminum, an aluminum alloy, or nickel. Surfaces thereof may be subjected to a surface treatment such as a plating treatment for the purpose of imparting scratch resistance without conductivity.

<Conductive elastic layer>

One kind or two or more kinds of elastomers such as rubbers and thermoplastic elastomers used in the elastic layers (conductive elastic layers) of the conventional electrophotographic members can each be used as a material for forming the conductive elastic layer.

Specific examples of the rubbers include a urethane rubber, a silicone rubber, a butadiene rubber, an isoprene rubber, a chloroprene rubber, a styrene-butadiene rubber, an ethylene-propylene rubber, a polynorbornene rubber, a styrene-butadiene-styrene rubber, an acrylonitrile rubber, an epichlorohydrin rubber, and an alkyl ether rubber.

Further, specific examples of the thermoplastic elastomers include: a styrene-based elastomer ("RABALON" (trade name, manufactured by Mitsubishi Chemical Corporation) or "SEPTON compound" (trade name, manufactured by KURARAY CO., LTD.)); and an olefin-based elastomer ("Thermolan" (trade name, manufactured by Mitsubishi Chemical Corporation), "Milastomer" (trade name, manufactured by Mitsui Chemicals, Inc.), "Sumitomo TPE" (trade name, manufactured by Sumitomo Chemical Co., Ltd.), or "Santoprene" (trade name, manufactured by Advanced Elastomer Systems, L.P.)).

Cationic surfactants, anionic surfactants, antistatic agents, electrolytes, conductive carbon, graphite, metal particles, and conductive polymers such as polyaniline, polypyrrole, and polyacetylene can be used as conductive agents used for the conductive elastic layer. Inorganic or organic fillers and crosslinkers may also be added to the conductive elastic layer. The conductive elastic layer had a hardness of preferably 70° or more, particularly preferably 73° or more

to 90° or less (Asker C) as a rough standard from the viewpoint of inhibiting the deformation of the charging member when the charging member abuts on the electrophotographic photosensitive member which is an object to be charged.

<Surface layer>

The surface layer contains any one of or both of hydroxylated fullerene and oxidized fullerene, and a binder.

<<Hydroxylated fullerene>>

The hydroxylated fullerene is defined in claim 1. A hydroxylated fullerene is one obtained by binding hydroxyl (OH) group to a known fullerene molecule such as $C_{60}$, $C_{70}$, $C_{76}$, $C_{78}$, or $C_{84}$, or one obtained by binding hydroxyl group to $C_{60}$ or $C_{70}$. The hydroxylated fullerene of the present invention is
represented by the following formulae (1) and (2) or a mixture thereof.

$$C_{60}(OH)_m \cdot kH_2O \qquad (1)$$

$$C_{70}(OH)_n \cdot lH_2O \qquad (2)$$

In the formulae (1) and (2): m and n each independently represent an integer of 5 or more to 44 or less; and k and 1 each independently represent an integer of 0 or more to 9 or less. The hydroxylated fullerene is the one of the formula $C_{60}(OH)_m \cdot kH_2O$ or $C_{70}(OH)_n \cdot lH_2O$ or a mixture thereof, where: m and n each independently represent an integer of 5 or more to 44 or less ($5 \leq m \leq 44$, $5 \leq n \leq 44$); and k and 1 each independently represent an integer of 0 or more to 9 or less ($0 \leq k \leq 9$, $0 \leq 1 \leq 9$).

<<Oxidized fullerene»

The oxidized fullerene is defined in claim 1. A oxidized fullerene is one obtained by binding oxygen atom (O) to a known fullerene molecule such as $C_{60}$, $C_{70}$, $C_{76}$, $C_{78}$, or $C_{84}$, or one obtained by binding oxygen atom to $C_{60}$ or $C_{70}$. The oxidized fullerene of the present invention is represented by the following formulae (3) and (4) or a mixture thereof.

$$C_{60}(O)_o \qquad (3)$$

$$C_{70}(O)_p \qquad (4)$$

In the formulae (3) and (4), o and p each independently represent an integer of 1 or more to 3 or less.

A total amount of the hydroxylated fullerene and the oxidized fullerene contained in the surface layer is preferably 1.0 part by mass or more to 5.0 parts by mass or less with respect to 100.0 parts by mass of the surface layer.

The hydroxylated fullerene is excellent in solubility in water and an alcohol, and thus is particularly suitably used in the present invention. Of those, the hydroxylated fullerene represented by any one of the above-mentioned formulae (1) and (2) where m and n each independently represent an integer of 8 or more to 44 or less is suitably used.

A method of producing the hydroxylated fullerene itself is known. For example, $C_{60}(OH)_m$ (m=8, 10, 12) can be obtained by subjecting fullerene to a reaction with fuming sulfuric acid followed by hydrolyzing, and then treating the obtained product with a basic substance according to the disclosure of Japanese Patent Application Laid-Open No. 2004-168752.

Further, $C_{60}(OH)_{36} \cdot 9H_2O$, $C_{60}(OH)_{40} \cdot 9H_2O$, and $C_{60}H_4(OH)_{32} \cdot 6H_2O$ can be produced by appropriately selecting and setting conditions such as a type of fullerene, a concentration of a hydrogen peroxide solution, a use ratio thereof, and a reaction temperature according to the disclosure of International Patent WO2006/028297A.

Further, the following are given as commercially available hydroxylated fullerene: "nanom spectra D100" (trade name, manufactured by Frontier Carbon Corporation); and "Fullerenol" (trade name, manufactured by The Honjo Chemical Corporation).

In addition, the following are given as commercially available oxidized fullerene: "nanom spectra B100" (trade name, manufactured by Frontier Carbon Corporation); "FX-011" (trade name, manufactured by FLOX Corporation); "FX-021" (trade name, manufactured by FLOX Corporation); "FX-022" (trade name, manufactured by FLOX Corporation); "FX-031" (trade name, manufactured by FLOX Corporation); "FX-032" (trade name, manufactured by FLOX Corporation); and "FX-033" (trade name, manufactured by FLOX Corporation).

<<Binder>>

Thermoplastic resins, thermosetting resins, and cured products of condensed hydrolyzable silane compounds (modified polysiloxane) can be used as the binder. In particular, a polymer compound formed of cured modified polysiloxane is used because the bleeding of a low-molecular weight component from the conductive elastic layer to the surface of the charging member can be inhibited effectively. The polymer compound formed of the cured modified polysiloxane is described in detail below.

<<<Polymer compound formed of cured modified polysiloxane>>>

The polymer compound formed of cured modified polysiloxane includes a polymer compound having a structural unit represented by the following general formula (5).

General formula (5)

[Chem. 1]

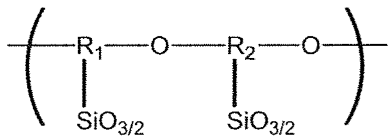

In the general formula (5), $R_1$ and $R_2$ each independently represent any one of the following general formulae (6) to (9).

General formula (6)

[Chem. 2]

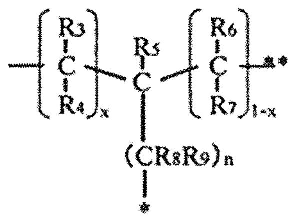

General formula (7)

[Chem. 3]

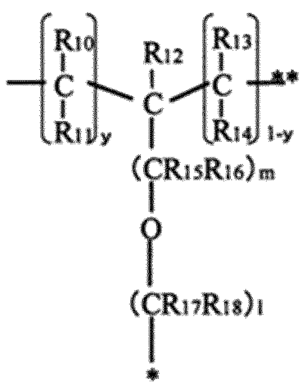

General formula (8)

[Chem. 4]

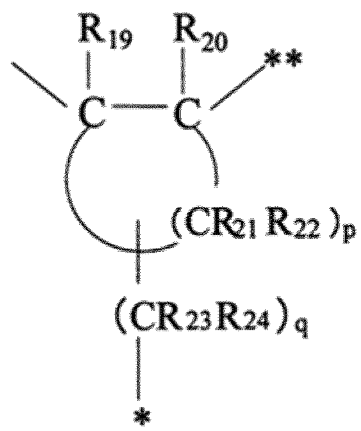

General formula (9)

[Chem. 5]

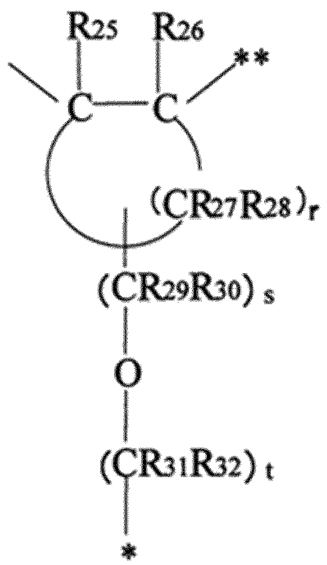

In the general formulae (6) to (9): $R_3$ to $R_7$, $R_{10}$ to $R_{14}$, $R_{19}$, $R_{20}$, $R_{25}$, and $R_{26}$ each independently represent hydrogen, a linear or branched alkyl group having 1 to 4 carbon atoms, a hydroxyl group, a carboxyl group, or an amino group; $R_8$, $R_9$, $R_{15}$ to $R_{18}$, $R_{23}$, $R_{24}$, and $R_{29}$ to $R_{32}$ each independently represent hydrogen or a linear or branched alkyl group having 1 to 4 carbon atoms; and $R_{21}$, $R_{22}$, $R_{27}$, and $R_{28}$ each independently represent hydrogen, an alkoxyl group having 1 to 4 carbon atoms, or a linear or branched alkyl group having 1 to 4 carbon atoms. In addition, $CR_8R_9$, $CR_{15}R_{16}$, $CR_{17}R_{18}$, $CR_{23}R_{24}$, $CR_{29}R_{30}$, and $CR_{31}R_{32}$ may represent carbonyl groups.

$R_5$ and any one of $R_3$, $R_4$, $R_6$, and $R_7$; $R_3$ and $R_4$, $R_6$ and $R_7$, $R_5$ and carbon in $(CR_8R_9)_n$; $R_{12}$ and any one of $R_{10}$, $R_{11}$, $R_{13}$, and $R_{14}$; $R_{10}$ and $R_{11}$, $R_{13}$ and $R_{14}$, or $R_{12}$ and carbon in $(CR_{15}R_{16})_m$ may collaborate with each other to form a ring structure. n, m, l, q, s, and t each independently represent an integer of 1 or more to 8 or less. p and r each independently represent an integer of 4 or more to 12 or less. x and y each independently represent 0 or 1. Further, * and ** represent bonding positions with a silicon atom and an oxygen atom in the general formula (5), respectively.

Further, this polymer compound preferably has Si-O-Ti bond in the molecule and includes a structural unit represented by the following general formula (10). The compound has a large crosslinking density because it has a structure in which a siloxane bond and an organic chain moiety bonded to Si are mutually polymerized. In addition, the compound has Si-O-Ti bond, and hence has an additionally enhanced condensation rate of Si compared with a polymer

produced from the hydrolyzable silane compound alone. Thus, the surface layer containing a polymer according to the present invention is dense, and thus is effective for inhibiting bleeding of the low-molecular weight component from the conductive elastic layer.

$TiO_{4/2}$ (10)

An example of the polymer compound containing Si-O-Ti bond in the molecule and having structural units represented by the above-mentioned formulae (5) and (10) is described below. Specifically, part of the structure of the polymer in the case where $R_1$ and $R_2$ in the above-mentioned general formula (5) represent a structure represented by the general formula (6) and a structure represented by the general formula (7), respectively, is described below.

[Chem. 6]

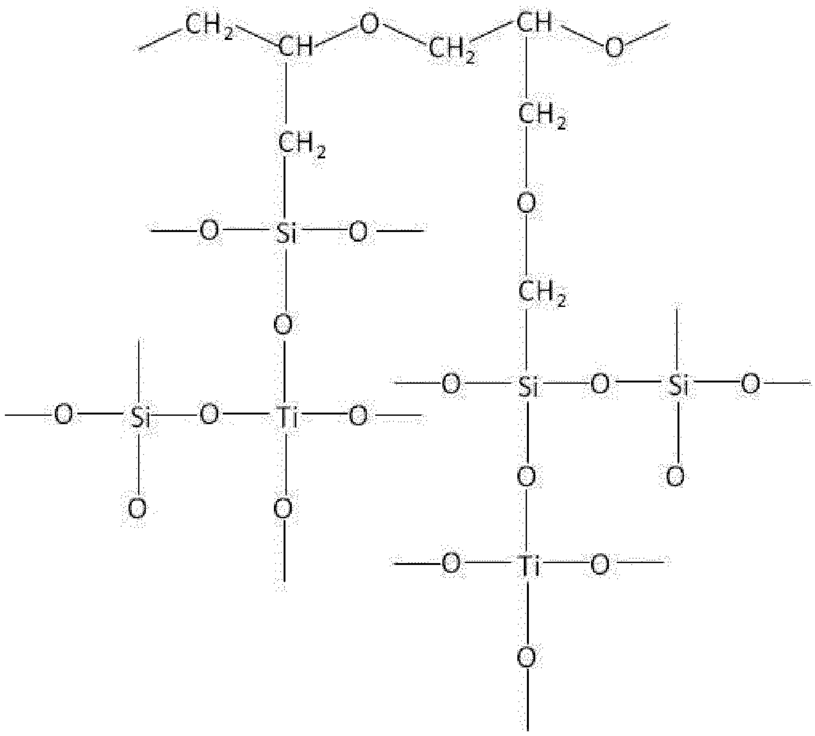

Further, part of the structure of the polymer in the case where $R_1$ and $R_2$ in the above-mentioned general formula (5) represent a structure represented by the general formula (6) and a structure represented by the general formula (9), respectively, is described below.

[Chem. 7]

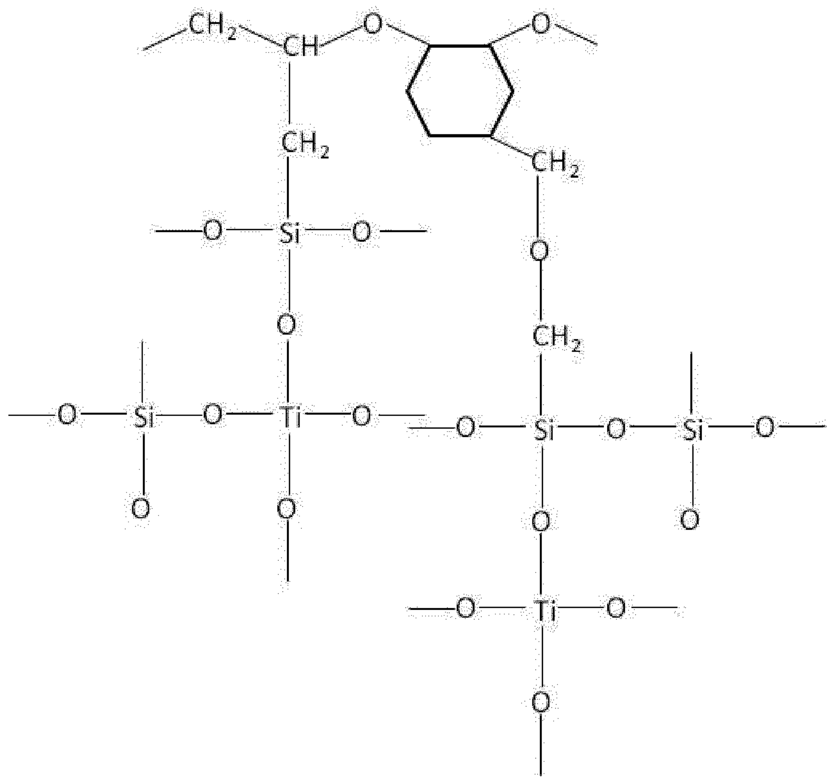

It is preferred in the polymer according to the present invention that $R_1$ and $R_2$ in the above-mentioned general formula (5) each independently represent any one selected from structures represented by the following general formulae (11) to (14). Such structures can make the surface layer more tough and excellent in durability. In particular, a structure containing ether group represented by any one of the following general formulae (12) and (14) is preferred because it further enhances adhesiveness of the surface later to the elastic layer.

General formula (11)

[Chem. 8]

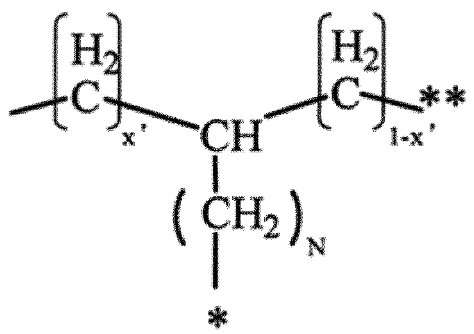

General formula (12)
[Chem. 9]

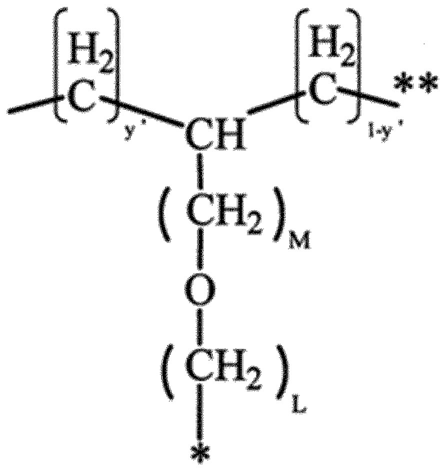

General formula (13)
[Chem. 10]

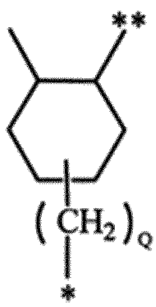

General formula (14)
[Chem. 11]

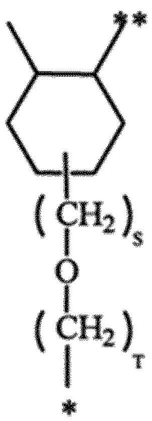

In the above-mentioned general formulae (11) to (14): N, M, L, Q, S, and T each independently represent an

integer of 1 or more to 8 or less; x' and y' each independently represent 0 or 1; and * and ** represent bonding positions with a silicon atom and an oxygen atom in the general formula (5), respectively.

Further, a ratio Ti/Si of the number of titanium atoms to the number of silicon atoms in the polymer compound according to the present invention is preferably 0.1 or more to 5.0 or less. As a result, the charging ability of the charging member can be additionally improved.

<Synthesis of polymer compound>

Next, hydrolyzable compounds used as raw materials for synthesizing the polymer compound having a structural unit represented by the above-mentioned formula (5) and the polymer compound having structural units represented by the above-mentioned formulae (5) and (10) and having Si-O-Ti bond in the molecule, and methods of synthesizing the polymer compounds using the same are described.

(A) Hydrolyzable silane compound having cationic polymerizable group in molecule

A hydrolyzable silane compound having cationic polymerizable group in the molecule can include a compound represented by the following formula (15):

$$R_{33}\text{-}Si(OR_{34})(OR_{35})(OR_{36}) \qquad (15)$$

In the formula (15): $R_{33}$ represents any one selected from the structures represented by the following general formulae (16) to (19) each having epoxy group; and $R_{34}$ to $R_{36}$ each independently represent a linear or branched alkyl group having 1 to 4 carbon atoms.

General formula (16)

[Chem. 12]

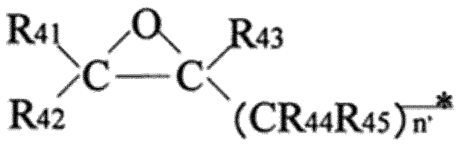

General formula (17)

[Chem. 13]

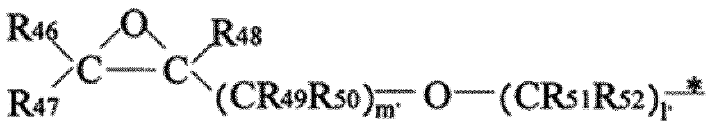

General formula (18)
[Chem. 14]

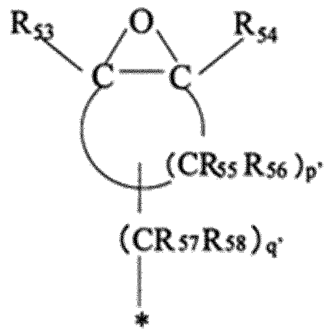

General formula (19)
[Chem. 15]

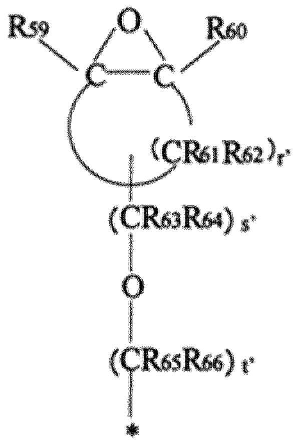

In the general formulae (16) to (19): $R_{41}$ to $R_{43}$, $R_{46}$ to $R_{48}$, $R_{53}$, $R_{54}$, $R_{59}$, and $R_{60}$ each independently represent hydrogen, a linear or branched alkyl group having 1 to 4 carbon atoms, a hydroxyl group, a carboxyl group, or an amino group; $R_{44}$, $R_{45}$, $R_{49}$ to $R_{52}$, $R_{57}$, $R_{58}$, and $R_{63}$ to $R_{66}$ each independently represent hydrogen, or a linear or branched alkyl group having 1 to 4 carbon atoms; $R_{55}$, $R_{56}$, $R_{61}$, and $R_{62}$ each independently represent hydrogen, an alkoxyl group having 1 to 4 carbon atoms, or a linear or branched alkyl group having 1 to 4 carbon atoms; $CR_{44}R_{45}$, $CR_{49}R_{50}$, $CR_{51}R_{52}$, $CR_{57}R_{58}$, $CR_{63}R_{64}$, and $R_{65}R_{66}$ may represent carbonyl groups; at least two of carbon atoms in $R_{41}$, $R_{42}$, $R_{43r}$ and $(CR_{44}R_{45})_{n'}$, at least two of carbon atoms in $R_{46}$, $R_{47}$, $R_{48}$, and $(CR_{49}R_{50})_{m'}$, $R_{53}$ and $R_{54}$, or $R_{59}$ and $R_{60}$ may collaborate with each other to form a ring that leads to the formation of a cycloalkane; n', m', l', q', s', and t' each independently represent an integer of 1 or more to 8 or less; p' and r' each independently represent an integer of 4 or more to 12 or less; and * represents a bonding position with a silicon atom in the general formula (5).

Specific examples of the hydrolyzable silane compound according to the component (A) are described below.

(A-1): 4-(1,2-epoxybutyl)trimethoxysilane
(A-2): 5,6-epoxyhexyltriethoxysilane
(A-3): 8-oxirane-2-yloctyltrimethoxysilane
(A-4): 8-oxirane-2-yloctyltriethoxysilane
(A-5): 3-glycidoxypropyltrimethoxysilane
(A-6): 3-glycidoxypropyltriethoxysilane
(A-7): 1-(3,4-epoxycyclohexyl)ethyltrimethoxysilane
(A-8): 1-(3,4-epoxycyclohexyl)ethyltriethoxysilane
(A-9): 3-(3,4-epoxycyclohexyl)methyloxypropyltrimethoxysilane

(A-10): 3-(3,4-epoxycyclohexyl)methyloxypropyltriethoxysilane

(B) Hydrolyzable silane compound

A hydrolyzable silane compound that may be used as a raw material for the polymer compound together with the hydrolyzable compound according to the above-mentioned component (A) can include a hydrolyzable silane compound represented by the following general formula (20).

$$R_{67}\text{-Si}(OR_{68})\ (O_{R69})\ (OR_{70}) \qquad (20)$$

In the above-mentioned general formula (20): $R_{67}$ represents an alkyl group having 1 to 10 carbon atoms or a phenyl group; and $R_{68}$ to $R_{70}$ each independently represent a linear or branched alkyl group having 1 to 6 carbon atoms.
Specific examples of the hydrolyzable silane compound according to the component (B) are described.

(B-1): methyltrimethoxysilane
(B-2): methyltriethoxysilane
(B-3): ethyltrimethoxysilane
(B-4): ethyltriethoxysilane
(B-5): propyltrimethoxysilane
(B-6): propyltriethoxysilane
(B-7): hexyltrimethoxysilane
(B-8): hexyltriethoxysilane
(B-9): hexyltripropoxysilane
(B-10): decyltrimethoxysilane
(B-11): decyltriethoxysilane
(B-12): phenyltrimethoxysilane
(B-13): phenyltriethoxysilane
(B-14): phenyltripropoxysilane

When the hydrolyzable silane compound having a structure represented by the above-mentioned formula (6) is used together with the hydrolyzable silane compound according to the above-mentioned formula (5), it is more preferred to combine a hydrolyzable silane compound in which $R_3$ represents a linear alkyl group having 6 to 10 carbon atoms and a hydrolyzable silane compound in which $R_3$ represents a phenyl group, as the hydrolyzable silane compound according to the above-mentioned formula (6). This is because the compatibility of a condensation product obtained by the hydrolysis, i.e., modified polysiloxane with a solvent becomes satisfactory.

(C) Hydrolyzable titanium compound

The polymer compound having Si-O-Ti bond in the molecule and having structural units represented by the above-mentioned formulae (5) and (10) can be obtained by using a hydrolyzable titanium compound represented by the following formula (21) in addition to the hydrolyzable silane compound according to the above-mentioned general formula (5) and the hydrolyzable silane compound, as an optional component, according to the above-mentioned general formula (6).
In addition, a crosslinked product of a hydrolytic condensation product of the hydrolyzable compound (A) having a structure represented by the above-mentioned formula (15) and a hydrolyzable compound (C) represented by the following formula (21) can control the elastic modulus and denseness of the surface layer by controlling degrees of hydrolytic condensation which occur in a trifunctional portion of the formula (15) and a tetrafunctional portion of the formula (16). Further, by using the organic chain site of $R_{33}$ in the formula (15) as a curing site, it becomes possible to control the toughness of the surface layer and the adhesiveness of the surface layer to the elastic layer. In addition, by using, as $R_{33}$, an organic group having an epoxy group to be ring-opened by ultraviolet irradiation, the thermal deterioration of the elastic layer, which is a lower layer, can be inhibited because a curing time can be greatly shortened differently from conventional thermosetting materials.

$$\text{Ti}(OR_{37})(OR_{38})(OR_{39})(OR_{40}) \qquad (21)$$

In the general formula (21), $R_{37}$ to $R_{40}$ each independently represent a linear or branched alkyl group having 1 to 9 carbon atoms. Specific examples of the hydrolyzable titanium compound according to the component (C) are described.

(C-1): tetramethoxytitanium
(C-2): tetraethoxytitanium
(C-3): tetrapropoxytitanium
(C-4): tetra-i-propoxytitanium
(C-5): tetra-n-butoxytitanium
(C-6): tetra-t-butoxytitanium
(C-7): tetra-2-ethylhexoxytitanium $[Ti(OC_8H_{17})_4]$

A method of forming the surface layer using the above-mentioned components (A) to (C) as the hydrolyzable compounds is described.

(1) Step of preparing a raw material solution for a hydrolytic condensation product by mixing components (A) to (C), water as a component (D), and an alcohol as a component (E).
(2) Step of synthesizing a condensation product by refluxing the above-mentioned raw material solution with heating to cause the hydrolytic condensation product to react with water.
(3) Step of preparing a coating solution for forming a surface layer by adding a photopolymerization initiator as a component (F) and hydroxylated fullerene and/or oxidized fullerene as a component (G) to a solution containing the condensation product obtained in the above-mentioned step (2).
(4) Step of forming a surface layer containing a crosslinked product of the hydrolytic condensation product by forming a coating film of the coating solution for forming a surface layer prepared in the above-mentioned step (3) on an elastic layer and then cleaving a cationic polymerizable group derived from the component (A) by photoirradiation, followed by crosslinking.

In the above-mentioned step (1), with regard to a ratio of amounts of the components (A) to (C) in the raw material solution, when molar numbers of the components (A), (B), and (C) are designated as [(A)], [(B)], and [(C)], respectively, the components are mixed so that a value of [(C)]/{[(A)]+[(C)]} is preferably 0.1 or more to 5.0 or less, particularly preferably 0.5 or more to 4.0 or less. Within this range, the condensation of the component (C) does not progress too rapidly, and precipitation hardly occurs in the solution of the hydrolytic condensation product. This value also corresponds to a ratio (Ti/Si) of the number of titanium atoms to the number of silicon atoms in the polymer compound.
Further, a molar ratio of the component (A) and the component (B) (=[(A)]/{[(A)]+[(B)]}) in the raw material solution is set to preferably 0.10 or more to 0.85 or less, particularly preferably 0.35 or more to 0.70 or less because the hardness of the surface layer is not enhanced excessively.
It is preferred that the amount of water as the component (D) be set to 0.4 or more to 1.2 or less with respect to the total molar number of the hydrolytic condensation product. By setting the amount within this range, it is possible to reduce residual unreacted monomers in the condensation reaction and inhibit occurrence of the precipitation in the solution of the hydrolytic condensation product.
In addition, a primary alcohol, a secondary alcohol, a tertiary alcohol, a mixed system of a primary alcohol and a secondary alcohol, or a mixed system of a primary alcohol and a tertiary alcohol is preferably used as the alcohol as the component (E). In particular, ethanol, a mixed liquid of methanol and 2-butanol, or a mixed liquid of ethanol and 2-butanol is preferably used.
In the above-mentioned step (3), when the hydroxylated fullerene and/or the oxidized fullerene as the component (G) is added, it is preferred to dissolve the component (G) at a predetermined concentration in water or an alcohol, which is then added to the solution containing the hydrolytic condensation product obtained in the above-mentioned step (2). This is because a solution form enhances dispersibility and weighing accuracy without scattering.
In addition, an aromatic sulfonium salt or an aromatic iodonium salt is preferably used as the photopolymerization initiator in the above-mentioned step (3) from the viewpoints of sensitivity, stability, and reactivity. In particular, bis(4-tert-butylphenyl)iodonium salt, a compound having a structure represented by the following chemical formula (22) (trade name: "Adekaoptomer SP150", manufactured by ADEKA CORPORATION), and a compound having a structure represented by the following chemical formula (23) (trade name: "IRGACURE 261", manufactured by Ciba Specialty Chemicals Inc.) are preferred.

Formula (22)

[Chem. 16]

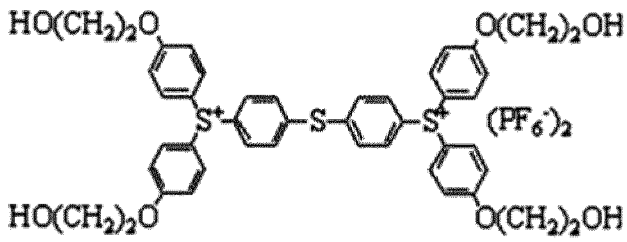

Formula (23)

[Chem. 17]

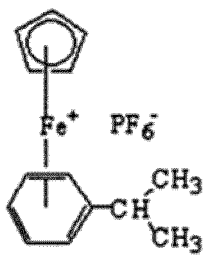

In addition, in the above-mentioned step (3), an appropriate solvent in consideration of volatile property may be used for the coating solution for forming a surface layer. The appropriate solvent includes ethyl acetate, methyl ethyl ketone, and a mixture thereof.

Further, an application using a roll coater, a dip application, and a ring application can be employed for forming the coating film of the coating solution for forming a surface layer.

Next, in the step (4), the coating film of the coating solution for forming a surface layer is irradiated with an active energy ray in order to cleave a cationic polymerizable group, e.g., an epoxy group in the molecule of the condensation product and crosslink the hydrolytic condensation products with each other. Ultraviolet light is preferred as the active energy ray.

Specific examples of the crosslinking reaction and the curing reaction in the step (4) are described in FIG. 5. That is, the condensation product produced by using 3-glycidoxypropyltrimethoxysilane or 3-glycidoxypropyltriethoxysilane as the component (A) and hydrolyzing the components (A), (B) and (C) has a glycidoxypropyl group as the cationic polymerizable group. The epoxy ring of the glycidoxypropyl group of such hydrolytic condensation product opens in the presence of a cationic polymerization catalyst (described as $R^+X^-$ in FIG. 5) to polymerize in a chain reaction. As a result, polysiloxanes including $TiO_{4/2}$ and $SiO_{3/2}$ are crosslinked with each other and cured to form a surface layer. It should be noted that n in FIG. 5 represents an integer of 1 or more.

When the environment under which the charging member is placed is an environment whose temperature and humidity change abruptly, a crimp or crack may be generated in the surface layer unless the surface layer sufficiently follows the expansion and contraction of the conductive elastic layer due to changes in the temperature and humidity. However, when the crosslinking reaction is performed with UV light that results in the generation of a small quantity of heat, adhesiveness between the conductive elastic layer and the surface layer is improved, and hence the surface layer becomes able to sufficiently follow the expansion and contraction of the conductive elastic layer. Accordingly, a crimp or crack in the surface layer due to changes in the temperature and humidity of an environment can be suppressed. Further, when the crosslinking reaction is performed with UV light, the deterioration of the conductive elastic layer due to thermal history can be suppressed. Accordingly, reductions in the electrical characteristics of the conductive elastic layer can also be suppressed.

A high-pressure mercury lamp, a metal halide lamp, a low-pressure mercury lamp, an excimer UV lamp, or the like can be used for the application of UV light. Of those, a UV light source rich in light having a wavelength of 150 nm or more to 480 nm or less is preferably used. It should be noted that the integral light quantity of UV light is defined as described below.

UV integral light quantity [$mJ/cm^2$]=UV light intensity [$mW/cm^2$]$\times$irradiation time [s]

The integral light quantity of UV light can be adjusted depending on, for example, the irradiation time, a lamp output, and a distance between the lamp and a body to be irradiated. Further, the integral light quantity may be provided

with a gradient within the irradiation time.

When a low-pressure mercury lamp is used, the integral light quantity of UV light can be measured with a UV integral actinometer "UIT-150-A" or "UVD-S254" (both are trade names, manufactured by USHIO INC.). Further, when an excimer UV lamp is used, the integral light quantity of UV light can be measured with a UV integral actinometer "UIT-150-A" or "VUV-S172" (both are trade names, manufactured by USHIO INC.).

The specific structure of the polymer compound which forms the binder in the surface layer thus formed is given above.

The thickness of the surface layer is 10 nm or more to 100 nm or less as a rough standard.

<Electrophotographic apparatus>

A construction of the electrophotographic apparatus according to the present invention is shown in FIG. 2. Photosensitive drums 1a to 1d respectively provided opposite to developing units 4a to 4d such as developing devices including toners of the respective colors therein are provided side by side in a movement direction of an intermediate transfer belt 6 extended between rollers 7 and 9. The respective color toner images formed on the respective photosensitive drums by the respective developing units are sequentially overlapped and transferred electrostatically on an intermediate transfer member by transfer rollers 8a to 8d, and as a result, a full color toner image with toners of four colors, i.e., yellow, magenta, cyan, and black is formed.

Further, charging units 2a to 2d, image exposure units 3a to 3d, and the developing units 4a to 4d are respectively provided around the photosensitive drums 1a to 1d in order to form the respective color toner images on the respective photosensitive drums. In addition, cleaning units 5a to 5d each having a cleaning blade for scraping and collecting toner remaining on each photosensitive drum after transferring a toner image to the intermediate transfer belt are provided.

Next, image-forming operations are described. The surfaces of the photosensitive drums 1a to 1d uniformly charged by the charging rollers, i.e., the respective charging units 2a to 2d are irradiated with laser beam modulated depending on image data from a host such as a personal computer by the image exposure units 3a to 3d, respectively, to form desired electrostatic latent images for the respective colors. The latent images are reversely developed at development positions and visualized as toner images by the developing units 4a to 4d, which are provided opposite to the photosensitive drums and are developing devices including toners of the respective colors therein. The toner images are sequentially transferred onto the intermediate transfer belt 6 at the respective transfer positions, and collectively transferred onto a transfer material P, which is fed from a sheet feeding unit (not shown) at a predetermined timing and conveyed by a conveying unit. A color toner image on the transfer material P is heated and melted by a fixing apparatus (not shown) and permanently fixed on a transfer medium to afford a desired color printing image.

A charging roller 2 according to the present invention is contacted with an electrophotographic photosensitive member 1 with a predetermined pressing force, and rotationally driven in a forward direction with respect to the rotation of the electrophotographic photosensitive member 1. The surface of the electrophotographic photosensitive member 1 is uniformly charged at a predetermined polar potential by applying a predetermined DC voltage alone from a charging bias applying power supply to the charging roller 2.

An image exposure unit 3 is, for example, a laser beam scanner. A potential at an exposed light portion on the charged surface of the electrophotographic photosensitive member is selectively lowered (decayed) to form an electrostatic latent image on the electrophotographic photosensitive member 1 by giving an image exposure corresponding to objective image information from the image exposure unit 3 to the charged surface of the electrophotographic photosensitive member 1. A developing unit 4 has: a toner supporting member for supporting and conveying toner, the toner supporting member being provided for the opening portion of a development container for storing the toner; a stirring member for stirring the stored toner; and a toner regulating member for regulating the amount of the toner supported by the toner supporting member (toner layer thickness). The developing unit 4 selectively causes toner (negative toner) charged so as to be identical in polarity to the charged polarity of the electrophotographic photosensitive member 1 to adhere to the exposed light portion of the electrostatic latent image on the surface of the electrophotographic photosensitive member 1 to visualize the electrostatic latent image as a toner image. A contact development mode is preferably employed in a full color electrophotographic apparatus that outputs full color images in order to improve toner scatters, for example.

The charging roller 2 according to the present invention, which is brought into contact with the electrophotographic photosensitive member 1, may be integrally supported by a supporting member such as a resin formed product, and used as a process cartridge (not shown), which is removably mounted onto a main body of the electrophotographic apparatus.

## Examples

Hereinafter, the present invention is described in more detail by way of specific examples. It should be noted

that the term "part(s)" in the examples means "part(s) by mass."

<Example 1>

<Production of conductive elastic roller>

Materials described in Table 1 were kneaded with a 6-L kneader for 20 minutes.

[Table 1]

| | |
|---|---|
| Moderate high nitrile [trade name: JSR N230SV (amount of bonging acrylonitrile: 35.0%, Mooney viscosity ($ML_{1+4}$, 100°C): 32, specific gravity: 0.98, manufactured by JSR Corporation] | 100 parts |
| Carbon black [trade name: #7270SB, particle diameter: 36 nm, nitrogen adsorption specific surface area: 58 $m^2/g$, DBP absorption amount: 62 $cm^3/100$ g, manufactured by Tokai Carbon Co., Ltd.] | 48 parts |
| Calcium carbonate as filler [trade name: Nanox #30, manufactured by Maruo Calcium Co., Ltd.] | 40 parts |
| Zinc oxide | 5 parts |
| Zinc stearate | 1 part |

A kneaded product I was obtained by adding materials described in Table 2 to the above-mentioned materials kneaded for 20 minutes and further kneading the mixture with an open roll for 8 minutes.

[Table 2]

| | |
|---|---|
| Tetrabenzylthiuram disulfide as vulcanization accelerator [trade name: Sanceler TBZTD, manufactured by Sanshin Chemical Industry Co., Ltd.] | 4.5 parts |
| Sulfur as vulcanizing agent | 1.2 parts |

Next, a columnar support made of steel having a diameter of 6 mm and a length of 252 mm (having a nickel-plated surface) was prepared. Then, a thermosetting adhesive containing metal and rubber (trade name: METALOC N-33, manufactured by TOYO KAGAKU KENKYUSHO CO., LTD.) was applied onto a region extending by up to 115.5 mm on both sides each with respect to the center in the axial direction of the columnar surface of the support (region having a total width in the axial direction of 231 mm). The resultant was dried at 80°C for 30 minutes, and was then further dried at 120°C for 1 hour.

The kneaded product I was extruded and the above-mentioned support applied with the thermosetting adhesive and dried was inserted simultaneously using a crosshead extruder. The resultant was processed and formed into a cylindrical shape having an outer diameter of 8.75 to 8.90 mm, and pulled out with holding the end portion of a cored bar, and the end portion was cut so that a rubber length was 242 mm.

A continuous heating furnace provided with two different temperature zones was used. The resultant is vulcanized by passing though a first zone set to a temperature of 80°C for 30 minutes and then passing through a second zone set to a temperature of 160°C for 30 minutes to afford a primarily vulcanized product for a conductive elastic layer.

It is known that a rapid increase in vulcanization temperature is liable to cause voids. This is probably because volatile byproducts of a vulcanization accelerator and the like due to a vulcanizing reaction are gasified and the gases are confined in a state in which they do not easily degassed upon curing of rubber by vulcanization. Thus, air bubbles occur in the circumference of the support or near the extrusion surface. When such vulcanized product is ground, a recess is generated to cause image failure.

The above-mentioned problem is solved by providing two curing zones, keeping a temperature in the first zone at a temperature lower than the vulcanization temperature to remove gas components sufficiently, and then carrying out vulcanization in the second zone.

Temperatures and time periods in the first zone and the second zone can be appropriately determined for the above-mentioned reason.

Next, both ends of the conductive elastic layer portion (rubber portion) of the conductive elastic roller 1 before surface grinding were cut so that the conductive elastic layer portion had a width in an axial direction of 232 mm. After that, the surface of the conductive elastic layer portion was ground with a rotary grindstone to produce a crown shape having a diameter at each end of 8.26 mm and a diameter at the central portion of 8.5 mm. Thus, a conductive elastic roller (conductive elastic roller after surface grinding)-1 having a ten-point average roughness (Rz) of a roller surface of 5.0 $\mu$m and a runout of 25 $\mu$m was obtained. The ten-point average roughness (Rz) was measured in conformity with

JIS B 6101. The runout was measured with a high-accuracy laser measuring machine LSM-430v manufactured by Mitutoyo Co., Ltd. Specifically, outer diameters were measured with the measuring machine, and then a difference between the maximum outer diameter and the minimum outer diameter was defined as an outer diameter difference runout. The measurement was performed at five points, and then the average of the outer diameter difference runouts at the five points was defined as the runout of the product subjected to the measurement. The resultant conductive elastic roller (conductive elastic roller after surface grinding)-1 had a hardness of 73° (Asker C).

<Preparation of coating agent for forming surface layer>

Next, a method of producing a coating agent is described.

«Synthesis of hydrolytic condensation product-1>>

1) Materials described in Table 3 were placed in a 300-ml recovery flask.

[Table 3]

| | |
|---|---|
| Glycidoxypropyltriethoxysilane (GPTES) [trade name: KBE-403, manufactured by Shin-Etsu Chemical Co., Ltd.] | 17.70 g (0.064 mol) |
| Hexyltrimethoxysilane (HeTMS) [trade name: KBM-3063, manufactured by Shin-Etsu Chemical Co., Ltd.] | 18.71 g (0.091 mol) |
| Tetra-i-propyl titanate 5N $(Ti(O\text{-}iPr)_4$ [manufactured by Kojundo Chemical Laboratory Co., Ltd., 99.999% purity] | 43.01 g (0.154 mol) |
| Methanol (MeOH), [special grade, Kishida Chemical Co., Ltd.] | 45.00 g |
| 2-Butanol (2-BuOH), [Kishida Chemical Co., Ltd.] | 48.68 g |

A football-type stirring bar (total length 45 mm×diameter 20 mm) was put into this flask, and the materials were stirred and mixed on a stirrer at a rotation frequency of 500 rpm for 1 minute. In addition, the rotation frequency of the stirrer was changed to 900 rpm, and 3.89 g of ion exchange water (pH=5.5) were added dropwise.

It should be noted that molar ratios of GPTES as the component (A), HeTMS as the component (B), and $Ti(O\text{-}iPr)_4$ as the component (C) with respect to the total molar number (100 mol%) of the components were (A): 20.59 mol%, (B): 29.41 mol%, and (C): 50.00 mol%, respectively.

2) An oil bath having a temperature set to 120°C was placed on a stirrer with a temperature runaway prevention mechanism, the above-mentioned flask was subjected to reflux under heating for 3 hours at a rotation frequency of 750 rpm with setting a time to reach 120°C to 20 minutes, to thereby obtain a solution of a hydrolytic condensation product-1. The resultant solution was visually observed, and no precipitate was identified and the solution was clear.

3) Next, a polymerization initiator solution was prepared by dissolving aromatic sulfonium salt (trade name: Adekaoptomer SP-150 manufactured by ADEKA Corporation) as a cationic photopolymerization initiator as the component (F) in methanol at a concentration of 10 mass%. The polymerization initiator solution was added to the above-mentioned solution of the hydrolytic condensation product-1 so that the amount of the initiator was 1.5 mass% with respect to the hydrolytic condensation product-1.

4) $C_{60}(OH)_{44}\cdot 8H_2O$ was synthesized as hydroxylated fullerene as the component (G). The synthesis was carried out according to the method described in International Patent WO06/028297A. Specifically, fullerene was subjected to a reaction in the presence of 30 wt% hydrogen peroxide solution at a temperature of 60°C for 16 hours to yield the above-mentioned hydroxylated fullerene.

The hydroxylated fullerene was dissolved at a concentration of 1.0 wt% in methanol to prepare a hydroxylated fullerene solution. The hydroxylated fullerene solution was added to the solution of the hydrolytic condensation product-1 having added thereto the polymerization initiator, which had been prepared in the above-mentioned step 3), so that the amount of the hydroxylated fullerene was 3.0 wt% with respect to the hydrolytic condensation product-1.

Next, the concentration of the hydrolytic condensation product-1 was adjusted to 1.0 wt% with ethanol to obtain a coating solution-1 for forming a surface layer.

The coating solution was applied with a ring-shaped coating head onto the conductive elastic layer of the conductive elastic roller, which had been previously formed and whose surface had been previously ground, to thereby form a coating film. The discharge amount of the coating solution from the coating head was 0.008 ml/s, the relative movement rate of the coating head and the conductive elastic roller was 20 mm/s, and the total discharge amount of

the coating solution was 0.064 ml.

Next, a surface layer was formed by irradiating the coating film on the conductive elastic layer with ultraviolet light having a wavelength of 254 nm so that an integral light quantity was 9,000 mJ/cm$^2$ to cleave an epoxy group in the coating film and crosslink polysiloxane chains with each other. It should be noted that a low-pressure mercury lamp manufactured by Harrison Toshiba Lighting Corporation was used for the irradiation with the ultraviolet light. Thus, the charging roller 1 was obtained.

<Evaluation of cured product for chemical structure>

It was confirmed by employing $^{29}$Si-NMR and $^{13}$C-NMR measurements that the cured product obtained by crosslinking the hydrolytic condensation product 1 according to this example through the application of ultraviolet light (UV) had a structure represented by the general formula (5) [apparatus used: JMN-EX400 (trade name), JEOL Ltd.]. FIGS. 6 and 7 show the results of the measurements. The measurement procedure of each of both the $^{29}$Si-NMR and $^{13}$C-NMR measurements is as described below. First, the condensation product 1 was formed into a film on an aluminum sheet, and was then cured by the application of UV. The cured product was peeled from the aluminum sheet, and was then pulverized. The pulverized product was used as a sample for an NMR measurement.

FIG. 6 shows the results of the $^{29}$Si-NMR measurement where T1 represents $-SiO_{1/2}(OR)_2$, T2 represents $-SiO_{2/2}(OR)$, and T3 represents $-SiO_{3/2}$. It was confirmed from the presence of T3 that a hydrolyzable silane compound having organic chain including epoxy group was condensed and some species existed in $-SiO_{3/2}$ states. In FIG. 7, it was confirmed by $^{13}$C-NMR that all epoxy groups were polymerized without remaining. In view of the foregoing, it was confirmed that the cured product of the condensation product 1 had a structure represented by the general formula (1) according to the present invention.

<Observation of Si-O-Ti bond>

The presence of Si-O-Ti bond in the surface layer of the charging roller was confirmed by ESCA [apparatus used: Quantum 2000 (trade name), manufactured by ULVAC-PHI, Incorporated]. A bonding mode in the surface layer was evaluated by irradiating the surface of the roller with X-ray. FIG. 8 shows the results of the measurement. The presence of Si-O-Ti bond was confirmed by detected O1s spectrum.

<Evaluation 1> Measurement of dynamic friction coefficient of charging roller

A static friction coefficient and a dynamic friction coefficient of this charging roller were measured. A method for the measurement is described with reference to FIG. 3. This method for the measurement is suitable when an object to be measured has a roller shape, and is in conformity with the Euler's belt formula. According to this method, a belt 32 (thickness: 20 μm, width: 30 mm, length: 180 mm), which is brought into contact with a charging member 31 to be measured at a predetermined angle (θ), is connected at one end to a measurement unit (load meter) 33 connected to a recorder 34, and is connected at the other end to a weight 35. When the conductive member is rotated in a predetermined direction at a predetermined rate in this state, and a force measured in the measurement unit is defined as F (g) and a weight of the weight is defined as W (g). In this case, a friction coefficient (μ) is determined with the following equation.

$$\mu=(1/\theta)\ln(F/W)$$

One example of charts obtained by this method for the measurement is shown in FIG. 4. Here, it is found that a value immediately after rotating the charging roller in a non-rotating time period 41 (not rotated) is a force required for starting the rotation and the subsequent force is required for continuing the rotation. Here, a force at a rotation starting point 42 (i.e., a time point of t=0 seconds) can be called a static friction force, and a force at an optional time point within $0<t$ (seconds)$\leq 10$ can be called a dynamic friction force at the optional time point. The average of forces after 8 to 10 seconds was defined as the dynamic friction force in the present invention.

Further, in the evaluation, a charging roller as a reference example was separately produced in the same manner as the above-mentioned charging roller except that no hydroxylated fullerene and/or no oxidized fullerene was added. The dynamic friction coefficients of the charging roller according to this example and the roller as a reference were measured, and a rate of increase in dynamic friction coefficient was determined with the following equation. The results are shown in Table 5.

Rate of increase in dynamic friction coefficient=(Dynamic friction coefficient of charging roller according to this example)/(Dynamic friction coefficient of roller as reference).

A thickness of the surface layer was measured by the following method. The outermost surface of the charging roller 1 was analyzed in a thickness direction by Ar+ ion sputtering with direct ESCA, and a depth at which an Si2p3 peak intensity was not changed was defined as the thickness. The thickness of the surface layer in the charging roller 1 was 40 nm.

Apparatus: "Quantum 2000" (trade name, manufactured by ULVAC-PHI, Incorporated)
X-ray: monochrome Al kα, 25 w, 15 kV, 100 μm
Pass energy: 23.5 eV
Step width: 0.1 eV
Sample tilt angle: 45°
Ar+ sputtering: 4 kV, 2×2 $mm^2$, 6 sec/cycle
(sputtering rate: 30 nm/min. $SiO_2$)

<Evaluation 2> Presence or absence of ghost on electrophotographic image

The charging roller 1 was incorporated into a process cartridge (trade name: "Q5950A (black)" manufactured by Hewlett-Packard Company). The charging roller and the photosensitive member abut on each other constantly in the process cartridge. Further, the electrophotographic photosensitive member incorporated in the above-mentioned process cartridge is an organic electrophotographic photosensitive member in which an organic photosensitive layer having a thickness of 19 μm is formed on a support. Further, the organic photosensitive layer is a laminated photosensitive layer in which a charge generation layer and a charge transport layer containing modified polyarylate (binder resin) are laminated in the stated order from the support side, and the charge transport layer is the surface layer of the electrophotographic photosensitive member.

The process cartridge was left to stand overnight under a high-temperature and high-humidity environment (temperature: 30°C, relative humidity: 80% RH), and likewise the process cartridge was mounted in a laser-beam printer (trade name: "HP Color LaserJet 4700 Printer" manufactured by Hewlett-Packard Company) for longitudinally outputting A4 paper. It should be noted that a development mode of the laser printer is a reversal development mode, an output speed of a transfer material is 164 mm/s, and an image resolution is 600 dpi.

Further, the toner used for the above-mentioned laser printer is the so-called polymerization toner including particles obtained by suspension polymerization of a polymerizable monomer system including wax, a charge controlling agent, a pigment, styrene, butyl acrylate, and an ester monomer in an aqueous medium. The toner is the polymerization toner containing toner particles obtained by externally adding silica fine particles and titanium oxide fine particles to the above-mentioned particles, and has a glass transition temperature of 63°C and a volume average particle diameter of about 6 μm.

Using the laser printer, an about 2-cm square solid black image (exposed portion) was recorded on the first turn of a photosensitive drum, and a halftone image (image of depicting a line having a width of one dot in a direction perpendicular to the rotation direction of the photosensitive drum at an interval of two dots) was recorded on the second turn of the photosensitive drum. The resultant halftone image was observed visually, the presence or absence of a ghost and the degree thereof were evaluated based on the following criteria.

It should be noted that the ghost refers to an image in which the previous image pattern on the photosensitive drum is developed more strongly and generated on a material to be recorded because charging in the exposed portion (toner image portion) on the first turn of the photosensitive drum becomes insufficient on the second turn of the photosensitive drum.

AA: No ghost is observed.
A: A ghost is slightly observed.
B: A contour of a ghost can be identified.
C: A ghost with a high density can be identified.

<Evaluation 3> Evaluation of charging unevenness after leaving to stand under high-temperature and high-humidity environment

The process cartridge subjected to Evaluation 2 was left to stand under a high-temperature and high-humidity environment (temperature: 45°C, relative humidity: 95%) for 30 days, and left to stand under a normal-temperature and normal-humidity environment (temperature: 25°C, relative humidity: 55%) for 72 hours. Then, the process cartridge was mounted in the laser-beam printer (trade name: "HP ColorLaserJet 4700 Printer" manufactured by Hewlett-Packard Company). Using the printer, a halftone image (image of depicting a line having a width of one dot in a direction perpendicular to the rotation direction of the photosensitive drum at an interval of two dots) was output on A4-sized paper. The resultant halftone image was observed visually, and the presence or absence of a black line based on charging unevenness due to a slip between the charging roller and the photosensitive drum, and the degree thereof were evaluated based on the following criteria.

AA: No black lines were observed.
A: Black lines with a very low density were observed at an end of an image.
B: Black lines with a low density were observed at an end of an image.
C: Black lines with a high density were observed at an end of an image.

<Example 2>

A charging roller was produced and evaluated in the same manner as in Example 1 except that the hydroxylated fullerene was changed to a mixture of $C_{60}(OH)_{44}{\cdot}8H_2O$ and $C_{70}(OH)_{44}{\cdot}8H_2O$ (mass ratio: 1:1).

<Example 3>

A solution of hydroxylated fullerene was prepared in the same manner as in Example 1 except that the hydroxylated fullerene was changed to $C_{60}(OH)_5$ [trade name: nanom spectra D100, manufactured by Frontier Carbon Corporation]. The solution of hydroxylated fullerene was added to the solution of the hydrolytic condensation product-1 having added thereto the polymerization initiator so that the amount of the hydroxylated fullerene was 1.0 wt% with respect to the hydrolytic condensation product-1. A charging roller was produced and evaluated in the same manner as in Example 1 except the foregoing.

<Example 4>

A charging roller was produced and evaluated in the same manner as in Example 1 except that the hydroxylated fullerene was changed to a mixture of $C_{60}(OH)_8$, $C_{60}(OH)_{10}$, and $C_{60}(OH)_{12}$ (mass ratio=1:1:1) [trade name: Fullerenol, manufactured by The Honjo Chemical Corporation].

<Example 5>

A charging roller was produced and evaluated in the same manner as in Example 1 except that the hydroxylated fullerene was changed to $C_{60}(OH)_{36}{\cdot}9H_2O$ synthesized by the method described in International Patent WO06/028297A.

<Example 6>

A charging roller was produced and evaluated in the same manner as in Example 1 except that the hydroxylated fullerene was changed to $C_{60}(OH)_{40}{\cdot}9H_2O$ synthesized by the method described in International Patent WO06/028297A.

<Example 7>

A solution of oxidized fullerene was prepared in the same manner as in Example 1 except that the hydroxylated fullerene was changed to $C_{60}(O)_1$ [trade name: nanom spectra B100, manufactured by Frontier Carbon Corporation]. The solution of oxidized fullerene was added to the solution of the hydrolytic condensation product-1 having added thereto the polymerization initiator so that the amount of the oxidized fullerene was 1.0 wt% with respect to the hydrolytic condensation product-1. A charging roller was produced and evaluated in the same manner as in Example 1 except the foregoing.

<Example 8>

A charging roller was produced and evaluated in the same manner as in Example 7 except that the oxidized fullerene was changed to $C_{60}(O)_3$ [trade name: FX-033, manufactured by FLOX Corporation].

<Examples 9 and 10>

The solution of the hydroxylated fullerene prepared in Example 2 was added to the solution of the hydrolytic

condensation product-1 having added thereto the polymerization initiator so that the amount of the hydroxylated fullerene was 1.0 wt% or 5.0 wt% with respect to the hydrolytic condensation product-1. A charging roller was produced and evaluated in the same manner as in Example 2 except the foregoing.

<Examples 11 to 21>

Compositions of the solutions of the hydrolytic condensation products 11 to 21 according to Examples 11 to 21 are shown in Table 4-1. It should be noted that the hydrolyzable compounds according to the components (A) to (C) and mixing ratios thereof (molar ratios) are shown in Table 4-2.

Charging rollers 11 to 21 were produced and evaluated in the same manner as in Example 2 except that the solution of the hydrolytic condensation product-2 in Example 2 was changed to the respective solutions of the above-mentioned hydrolytic condensation products 11 to 21.

<Comparative Example 1>

A coating solution for forming a surface layer was prepared in the same manner as in Example 19 except that the hydroxylated fullerene was not added to the coating solution for forming a surface layer used in Example 19. Using the coating solution, a charging roller was produced and evaluated in the same manner as in Example 19.

The results of evaluation of the charging rollers according to Examples 1 to 21 and Comparative Example 1 are shown in Table 5.

[Table 4-1]

| | | | Example | | | | | | | | | | |
|---|---|---|---|---|---|---|---|---|---|---|---|---|---|
| Composition of solution for synthesizing hydrolytic condensation product | | | 11 | 12 | 13 | 14 | 15 | 16 | 17 | 18 | 19 | 20 | 21 |
| Total amount of (A)+(B)+(C) | | Parts by mass | 90.78 | 90.66 | 69.47 | 71.03 | 62.56 | 64.10 | 65.45 | 57.68 | 59.71 | 61.41 | 80.80 |
| (D) | Ion exchange water | Parts by mass | 2.29 | 2.23 | 703 | 6.28 | 6.34 | 5.92 | 5.55 | 5.83 | 5.41 | 5.05 | 3.89 |
| (E) | MeOH | Parts by mass | 40.00 | 35.00 | 50.00 | 45.00 | 50.00 | 50.00 | 50.00 | - | - | - | 40.00 |
| | EtOH | Parts by mass | - | - | - | - | - | - | - | 113.21 | 111.74 | 110.36 | - |
| | 2-BuOH | Parts by mass | 43.79 | 44.58 | 50.51 | 54.41 | 57.78 | 56.34 | 55.81 | - | - | - | 48.85 |
| (F) | SP-150 | Parts by mass | 1.50 | 1.50 | 1.50 | 1.50 | 1.50 | 1.50 | 1.50 | 1.50 | 1.50 | 1.50 | 1.50 |

[Table 4-2]

| | | | Example | | | | | | | | | | |
|---|---|---|---|---|---|---|---|---|---|---|---|---|---|
| Component | Substance name | | 11 | 12 | 13 | 14 | 15 | 16 | 17 | 18 | 19 | 20 | 21 |
| (A) | GPTES | mol% | 9.80 | 19.61 | 9.80 | 56.87 | 9.41 | 40.00 | 70.59 | 10.70 | 45.46 | 10.70 | 10.30 |
| (B) | HeTMS | mol% | 23.53 | 13.72 | 56.87 | 9.8 | 70.59 | 40.00 | 9.41 | 80.21 | 45.45 | 80.21 | 29.41 |
| | PhTES | mol% | - | - | - | - | - | - | - | - | - | - | 10.29 |
| (C) | $Ti(O\text{-}iPr)_4$ | mol% | 66.67 | 66.67 | 33.33 | 33.33 | 20.00 | 20.00 | 20.00 | 9.09 | 9.09 | 50.00 | 50.00 |
| (A)+(B)+(C) | | | 100.00 | 100.00 | 100.00 | 100.00 | 100.00 | 100.00 | 100.00 | 100.00 | 100.00 | 100.00 | 100.00 |
| (A)/[(A)+(B)] | | | 0.29 | 0.59 | 0.15 | 0.85 | 0.12 | 0.50 | 0.88 | 0.12 | 0.50 | 0.12 | 0.21 |
| (C)/[(A)+(B)] | | | 2.00 | 2.00 | 0.50 | 0.50 | 0.25 | 0.25 | 0.25 | 0.10 | 0.10 | 1.00 | 1.00 |

[Table 5]

| Example | Surface layer thickness (nm) | Evaluation 1 | Evaluation 2 | Evaluation 3 |
|---|---|---|---|---|
| Example 1 | 40 | 1.48 | AA | AA |
| Example 2 | 40 | 1.48 | AA | AA |
| Example 3 | 42 | 1.48 | A | A |
| Example 4 | 43 | 1.48 | A | AA |
| Example 5 | 44 | 1.48 | AA | AA |
| Example 6 | 45 | 1.48 | AA | AA |
| Example 7 | 46 | 1.05 | B | B |
| Example 8 | 47 | 1.05 | B | B |
| Example 9 | 48 | 1.48 | AA | AA |
| Example 10 | 49 | 1.48 | AA | AA |
| Example 11 | 46 | 1.48 | AA | AA |
| Example 12 | 46 | 1.38 | AA | AA |
| Example 13 | 35 | 1.38 | A | A |
| Example 14 | 35 | 1.28 | A | A |
| Example 15 | 28 | 1.28 | A | A |
| Example 16 | 28 | 1.23 | A | A |
| Example 17 | 28 | 1.23 | A | A |
| Example 18 | 26 | 1.23 | B | B |
| Example 19 | 26 | 1.11 | B | B |
| Example 20 | 26 | 1.11 | B | B |
| Example 21 | 40 | 1.48 | AA | AA |
| Comparative Example 1 | 26 | 1.00 | C | C |

<Comparative Example 2>

Fullerene ($C_{60}$) (trade name: nanom purple SUH, manufactured by Frontier Carbon Corporation) was dissolved at a concentration of 1.0 wt% in toluene to obtain a fullerene solution.

The fullerene solution was added to the solution of the hydrolytic condensation product-1 having added thereto the polymerization initiator, which had been prepared in the step 3) in Example 1, so that the amount of the fullerene was 3.0 wt% with respect to the hydrolytic condensation product-1. However, a precipitate was generated immediately after the addition, and it was not possible to produce a homogeneous coating solution which may be used for the formation of the surface layer.

As described above, according to the present invention, it is possible to obtain the charging member in which the friction coefficient of the surface was enhanced. As a result, the charging member is hard to slip when rotated according to the rotation of the photosensitive drum, and thus can uniformly charge the photosensitive drum. Further, even in a state in which a compression set easily occurs in the surface, i.e., even after the charging member abutting on the photosensitive drum was left to stand under a high-temperature and high-humidity environment, image failure (black lines) based on charging unevenness due to a slip between the charging member and the photosensitive drum was hard to occur. A possible reason for this is that even if the compression set occurred in the surface of the charging roller, the slip was hard to occur at that portion because of an increase in friction coefficient of the surface of the charging roller, and as a result, the charging unevenness was hard to occur.

**Reference Signs List**

100 charging roller
101 mandrel
102 conductive elastic layer
103 surface layer
1 electrophotographic photosensitive member (photosensitive drum)
2 charging member (charging roller)
3 image exposure unit
4 developing unit
5 cleaning unit
6 intermediate transfer belt
8 transfer member (transfer roller)
P transfer material

## Claims

1. A charging member, comprising:

a mandrel;
an elastic layer formed on an outer periphery of the mandrel; and
a surface layer formed on an outer periphery of the elastic layer, wherein
the surface layer comprises at least one selected from hydroxylated fullerene and oxidized fullerene, and a binder; and wherein

(A) the binder comprises a polymer compound having a structural unit represented by the following general formula (5):

General formula (5)

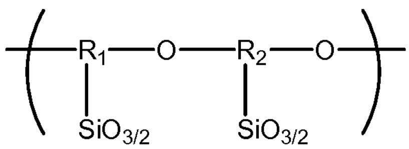

in the formula (5), $R_1$ and $R_2$ each independently represents any one of the following general formulae (6) to (9):

General formula (6)

[Chem. 2]

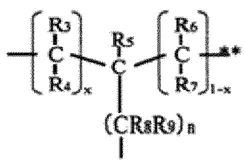

General formula (7)

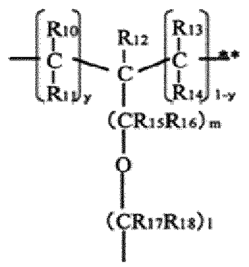

General formula (8)

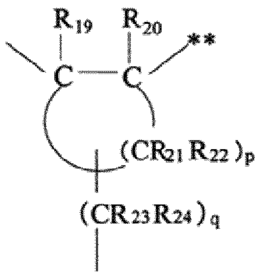

General formula (9)

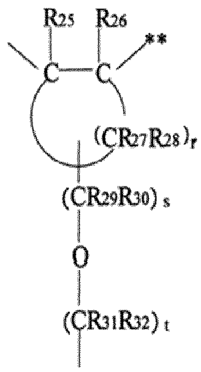

in the formulae (6) to (9):

$R_3$ to $R_7$, $R_{10}$ to $R_{14}$, $R_{19}$, $R_{20}$, $R_{25}$, and $R_{26}$ each independently represent hydrogen, a linear or branched alkyl group having 1 to 4 carbon atoms, a hydroxyl group, a carboxyl group, or an amino group;
$R_8$, $R_9$, $R_{15}$ to $R_{18}$, $R_{23}$, $R_{24}$, and $R_{29}$ to $R_{32}$ each independently represent hydrogen or a linear or branched alkyl group having 1 to 4 carbon atoms;
$R_{21}$, $R_{22}$, $R_{27}$, and $R_{28}$ each independently represent hydrogen, an alkoxyl group having 1 to 4 carbon atoms, or a linear or branched alkyl group having 1 to 4 carbon atoms;
n, m, l, q, s, and t each independently represent an integer of 1 or more to 8 or less;
p and r each independently represent an integer of 4 or more to 12 or less;
x and y each independently represent 0 or 1; and
* and ** represent bonding positions with a silicon atom and an oxygen atom in the general formula (5), respectively;

wherein
the hydroxylated fullerene includes at least one selected from the following formulae (1) and (2):

$C_{60}(OH)_m \cdot kH_2O$ Formula (1)

$C_{70}(OH)_n \cdot lH_2O$ Formula (2)

in the formulae (1) and (2): m and n each independently represents an integer of 5 or more to 44 or less; and k and l each independently represents an integer of 0 or more to 9 or less, and the oxidized fullerene includes at least one selected from the following formulae (3) and (4):

$C_{60}(O)_o$ Formula (3)

$C_{70}(O)_p$ Formula (4)

in the formulae (3) and (4): o and p each independently represents an integer of 1 or more to 3 or less.

**2.** The charging member according to claim 1, wherein in the hydroxylated fullerene of the formula (1):

m represents an integer of 36 or 40 with the proviso that k represents an integer of 9, or m represents an integer of 8, 10 or 12 with the proviso that k represents 0.

**3.** The charging member according to claim 1 or 2, wherein the polymer compound further comprises a structural unit represented by the following general formula (10), and has Si-O-Ti bond in a molecule:

General formula (10) $TiO_{4/2}$.

**4.** A process cartridge, comprising:

the charging member according to any one of claims 1 to 3; and
an electrophotographic photosensitive member, which is brought into contact with the charging member,
the members being integrally supported,
wherein the process cartridge is removably mounted onto a main body of an electrophotographic apparatus.

**5.** An electrophotographic apparatus, comprising:

the charging member according to any one of claims 1 to 3; and
an electrophotographic photosensitive member, which is brought into contact with the charging member.

**Patentansprüche**

**1.** Ladeelement, umfassend:

einen Drehstift;
eine an einer äußeren Peripherie des Drehstifts gebildete elastische Schicht; und
eine an einer äußeren Peripherie der elastischen Schicht gebildete Oberflächenschicht,

wobei
die Oberflächenschicht zumindest eines ausgewählt aus hydroxyliertem Fulleren und oxidiertem Fulleren, und ein Bindemittel umfasst; und wobei

(A) das Bindemittel eine Polymerverbindung mit einer durch die folgende allgemeine Formel (5) dargestellte Struktureinheit umfasst:

Allgemeine Formel (5)

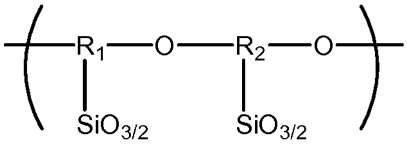

in der Formel (5) stellen $R_1$ und $R_2$ jeweils unabhängig eine der folgenden allgemeinen Formeln (6) bis (9) dar:

Allgemeine Formel (6)

[Chem. 2]

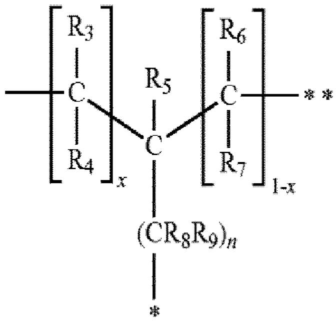

Allgemeine Formel (7)

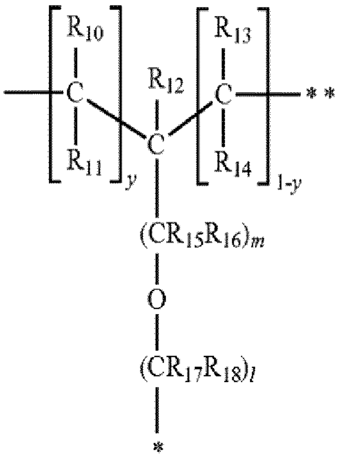

Allgemeine Formel (8)

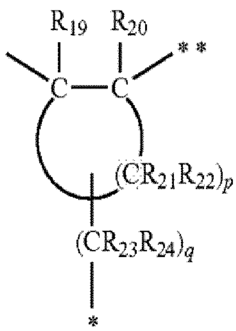

allgemeine Formel (9)

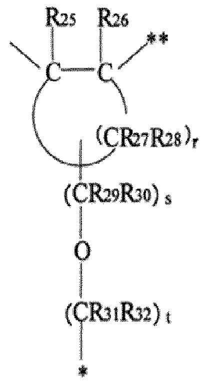

in den Formeln (6) bis (9):

stellen $R_3$ bis $R_7$, $R_{10}$ bis $R_{14}$, $R_{19}$, $R_{20}$, $R_{25}$ und $R_{26}$ jeweils unabhängig Wasserstoff, eine lineare oder verzweigte Alkylgruppe mit 1 bis 4 Kohlenstoffatomen, eine Hydroxylgruppe, eine Carboxylgruppe oder eine Aminogruppe dar;
stellen $R_8$, $R_9$, $R_{15}$ bis $R_{18}$, $R_{23}$, $R_{24}$ und $R_{29}$ bis $R_{32}$ jeweils unabhängig Wasserstoff oder eine lineare oder verzweigte Alkylgruppe mit 1 bis 4 Kohlenstoffatomen dar;
stellen $R_{21}$, $R_{22}$, $R_{27}$ und $R_{28}$ jeweils unabhängig Wasserstoff, eine Alkoxygruppe mit 1 bis 4 Kohlenstoffatomen, oder eine lineare oder verzweigte Alkylgruppe mit 1 bis 4 Kohlenstoffatomen dar;
stellen n, m, l, q, s und t jeweils unabhängig eine ganze Zahl von 1 oder mehr bis 8 oder weniger dar;
stellen p und r jeweils unabhängig eine ganze Zahl von 4 oder mehr bis 12 oder weniger dar;
stellen x und y jeweils unabhängig 0 oder 1 dar; und
stellen * und ** jeweils Bindepositionen mit einem Siliziumatom und einem Sauerstoffatom in der allgemeinen Formel (5) dar;

wobei
das hydroxylierte Fulleren beinhaltet zumindest eine ausgewählt aus den folgenden Formeln (1) und (2):

$C_{60}(OH)_m \cdot kH_2O$ Formel (1)

$C_{70}(OH)_n \cdot lH_2O$ Formel (2)

in den Formeln (1) und (2): stellen m und n jeweils unabhängig eine ganze Zahl von 5 oder mehr bis 44 oder weniger dar; und stellen k und l jeweils unabhängig eine ganze Zahl von 0 oder mehr bis 9 oder weniger dar, und beinhaltet das oxidierte Fulleren zumindest eine ausgewählt aus den folgenden Formeln (3) und (4):

$C_{60}(O)_o$ Formel (3)

$C_{70}(O)_p$ Formel (4)

in den Formeln (3) und (4): stellen o und p jeweils unabhängig eine ganze Zahl von 1 oder mehr bis 3 oder weniger dar.

**2.** Ladeelement nach Anspruch 1, wobei in dem hydroxylierten Fulleren der Formel (1):

m eine ganze Zahl von 36 oder 40 darstellt mit der Bedingung, dass k eine ganze Zahl von 9 darstellt, oder m eine ganze Zahl von 8, 10 oder 12 darstellt mit der Bedingung, dass k 0 darstellt.

**3.** Ladeelement nach Anspruch 1 oder 2, wobei die Polymerverbindung weiter eine durch die folgende allgemeine Formel (10) dargestellte Struktureinheit umfasst, und eine Si-O-Ti-Bindung in einem Molekül aufweist:

allgemeine Formel (10) $TiO_{4/2}$.

**4.** Prozesskartusche, umfassend:

das Ladeelement nach einem der Ansprüche 1 bis 3; und
ein elektrophotographisches photoempfindliches Element, welches in Kontakt mit dem Ladeelement gebracht ist,
die Elemente sind ganzheitlich gestützt,
wobei die Prozesskartusche an einen Hauptkörper einer elektrophotographischen Apparatur abnehmbar montiert ist.

**5.** Elektrophotographische Apparatur, umfassend:

das Ladeelement nach einem der Ansprüche 1 bis 3; und
ein elektrophotographisches photoempfindliches Element, welches in Kontakt mit dem Ladeelement gebracht ist.

## Revendications

**1.** Élément de charge, comprenant :

un mandrin ;
une couche élastique formée sur une périphérie externe du mandrin ; et
une couche de surface formée sur une périphérie externe de la couche élastique,

dans lequel :

la couche de surface comprend au moins l'un choisi parmi un fullerène hydroxylé et un fullerène oxydé, et un liant ; et où

(A) le liant comprend un composé polymère ayant un motif structural représenté par la formule générale (5) suivante :

Formule générale (5)

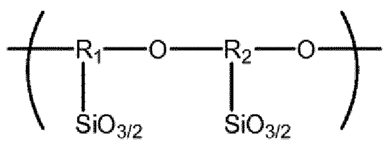

dans la formule (5), $R_1$ et $R_2$ représentent chacun indépendamment l'une quelconque des formules générales (6) à (9) suivantes :

Formule générale (6)
[Chem. 2]

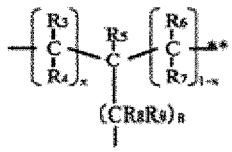

Formule générale (7)

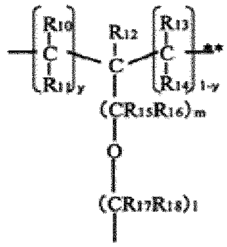

Formule générale (8)

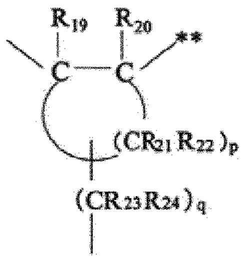

Formule générale (9)

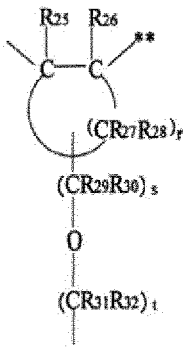

dans les formules (6) à (9) :

$R_3$ à $R_7$, $R_{10}$ à $R_{14}$, $R_{19}$, $R_{20}$, $R_{25}$ et $R_{26}$ représentent chacun indépendamment un hydrogène, un groupe alkyle linéaire ou ramifié ayant 1 à 4 atomes de carbone, un groupe hydroxyle, un groupe carboxyle ou un groupe amino ;
$R_8$, $R_9$, $R_{15}$ à $R_{18}$, $R_{23}$, $R_{24}$, et $R_{29}$ à $R_{32}$ représentent chacun indépendamment un hydrogène ou un groupe alkyle linéaire ou ramifié ayant 1 à 4 atome de carbone ;
$R_{21}$, $R_{22}$, $R_{27}$ et $R_{28}$ représentent chacun indépendamment un hydrogène, un groupe alkoxyle ayant 1 à 4 atomes de carbone, ou un groupe alkyle linéaire ou ramifié ayant 1 à 4 atomes de carbone ;
n, m, 1, q, s et t représentent chacun indépendamment un nombre entier de 1 ou plus à 8 ou moins ;
p et r représentent chacun indépendamment un nombre entier de 4 ou plus à 12 ou moins ;
x et y représentent chacun indépendamment 0 ou 1 ; et
* et ** représentent des positions de liaison avec un atome de silicium et un atome d'oxygène dans la formule générale (5), respectivement ;

où
le fullerène hydroxylé comprend au moins l'un choisi parmi les formules (1) et (2) suivantes :

$C_{60}(OH)_m \cdot kH_2O$ formule (1)

$C_{70}(OH)_n{\bullet}lH_2O$ formule (2)

dans les formules (1) et (2) : m et n représentent chacun indépendamment un nombre entier de 5 ou plus à 44 ou moins ; et k et 1 représentent chacun indépendamment un nombre entier de 0 ou plus à 9 ou moins, et le fullerène oxydé comprend au moins l'un choisi dans les formules (3) et (4) suivantes :

$C_{60}(O)_o$ formule (3)

$C_{70}(O)_p$ formule (4)

dans les formules (3) et (4) : o et p représentent chacun indépendamment un nombre entier de 1 ou plus à 3 ou moins.

**2.** Élément de charge selon la revendication 1, dans lequel dans le fullerène hydroxylé de la formule (1) :

m représente un nombre entier de 36 ou 40 à la condition que k représente un nombre entier de 9, ou m représente un nombre entier de 8, 10 ou 12 à la condition que k représente 0.

**3.** Élément de charge selon la revendication 1 ou 2, dans lequel le composé polymère comprend en outre un motif structural représenté par la formule générale (10) suivante, et a une liaison Si-O-Ti dans une molécule :

Formule générale (10) $TiO_{4/2}$

**4.** Cartouche de traitement, comprenant :

l'élément de charge selon l'une quelconque des revendications 1 à 3 ; et
un élément photosensible électrophotographique, qui est mis en contact avec l'élément de charge,
les éléments étant supportés intégralement,
la cartouche de traitement étant montée de manière amovible sur un corps principal d'un appareil électrophotographique.

**5.** Appareil électrophotographique, comprenant :

l'élément de charge selon l'une quelconque des revendications 1 à 3 ; et
un élément photosensible électrophotographique, qui est mis en contact avec l'élément de charge.

FIG. 1

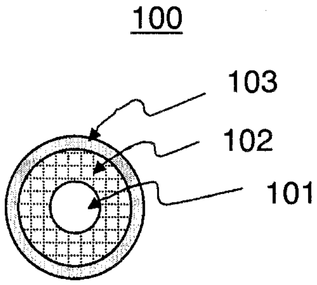
100
103
102
101

FIG. 2

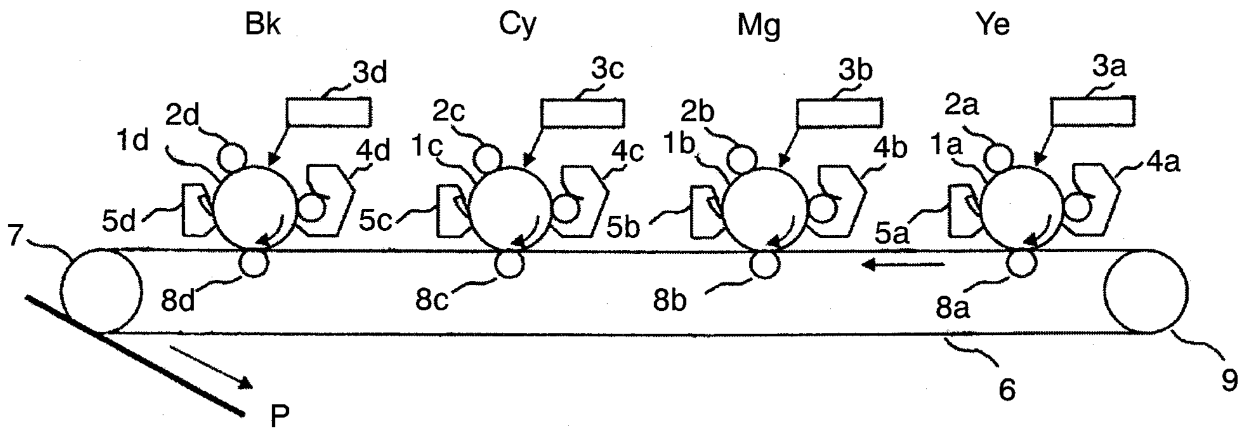
Bk
Cy
Mg
Ye
3d
3c
3b
3a
2d
2c
2b
2a
1d
1c
1b
1a
4d
4c
4b
4a
5d
5c
5b
5a
7
8d
8c
8b
8a
6
9
P

FIG. 3

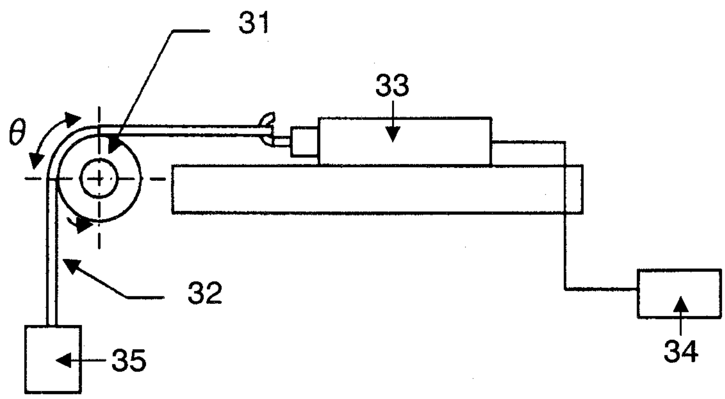


FIG. 4

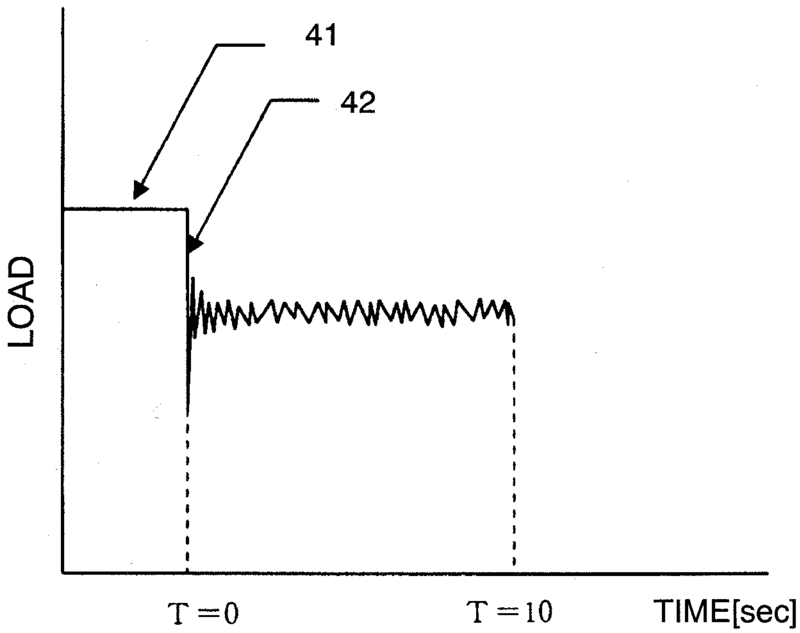

FIG. 5

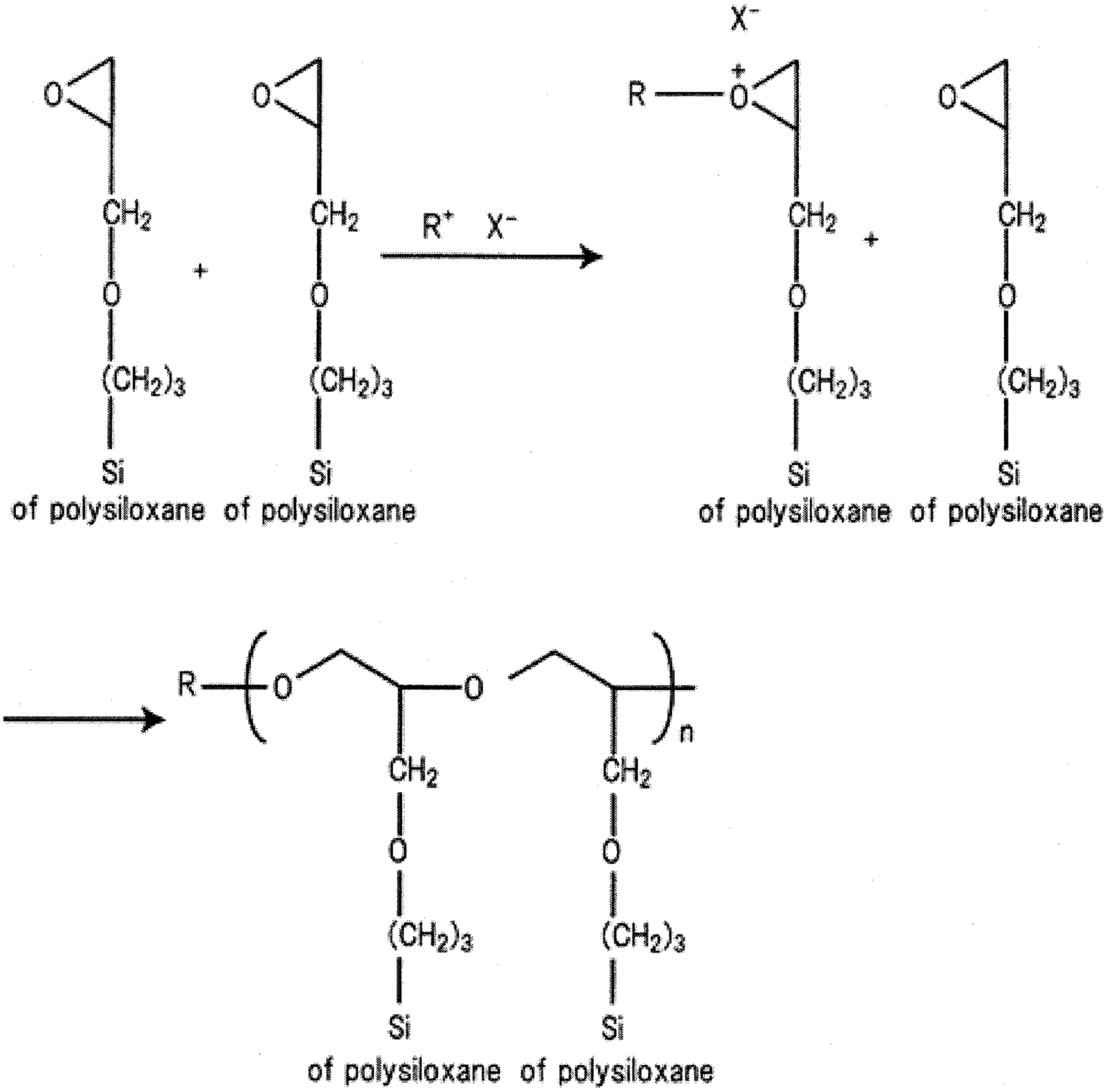

FIG. 6

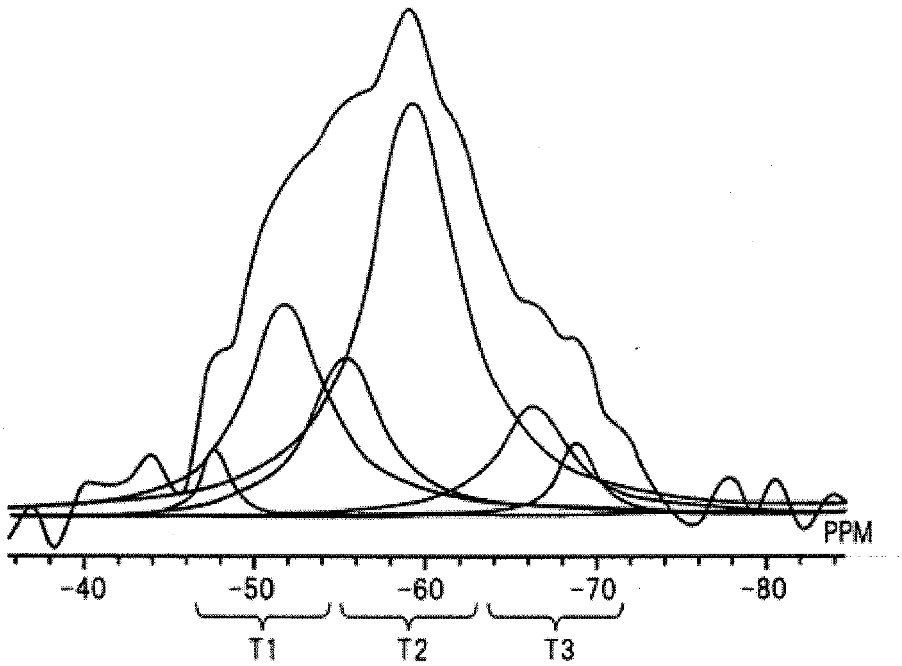

FIG. 7

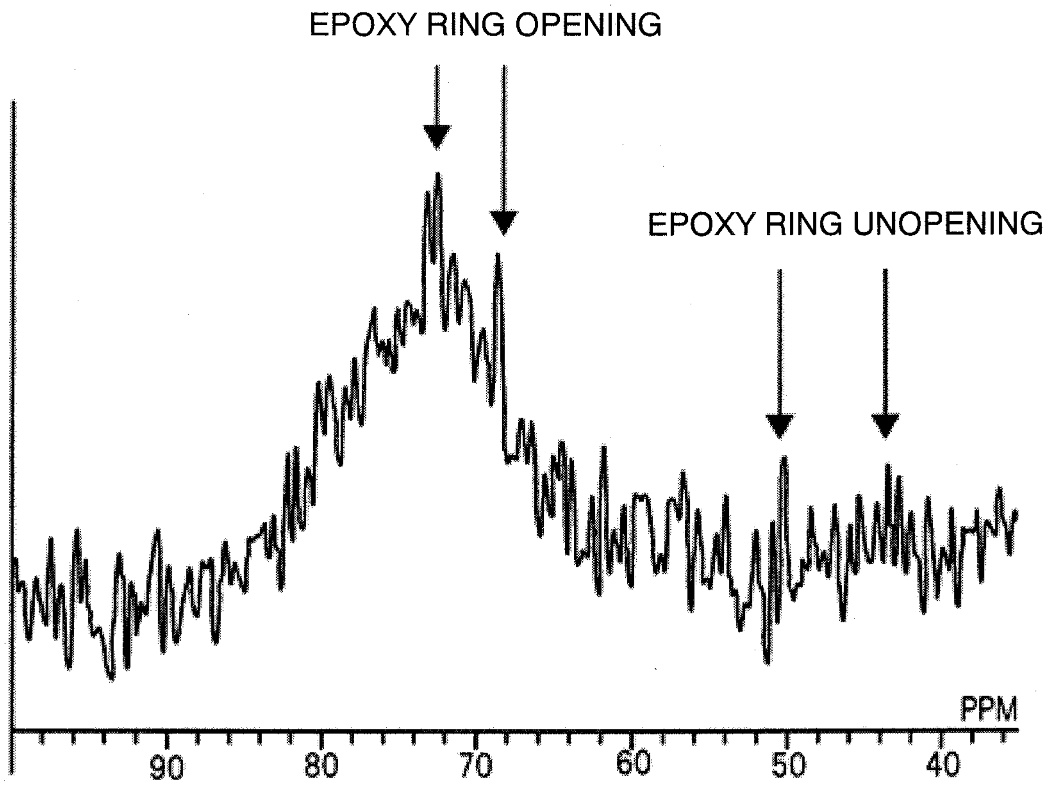

# FIG. 8

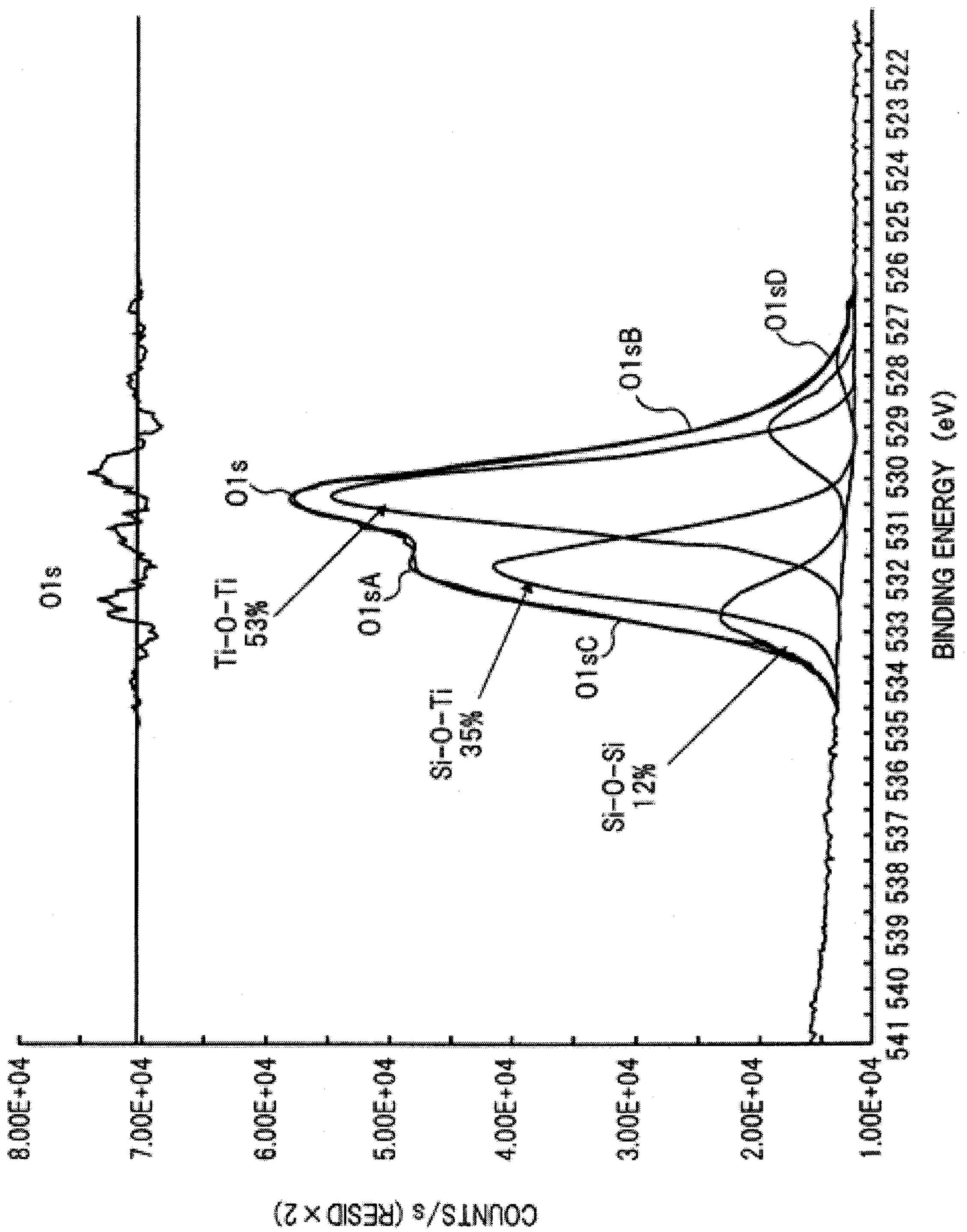
O1s
O1s
Ti-O-Ti
53%
O1sA
Si-O-Ti
35%
O1sC
Si-O-Si
12%
O1sB
O1sD
8.00E+04
7.00E+04
6.00E+04
5.00E+04
4.00E+04
3.00E+04
2.00E+04
1.00E+04
COUNTS/s (RESID × 2)
541 540 539 538 537 536 535 534 533 532 531 530 529 528 527 526 525 524 523 522
BINDING ENERGY (eV)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007093937 A
- KR 100359731 B1
- JP 2006267397 A
- JP 2004168752 A
- WO 2006028297 A
- WO 06028297 A